# FASCICULE DE BREVET EUROPEEN

(11) **EP 3 003 907 B1**
(45) Date de publication et mention de la délivrance du brevet: **29.03.2017**
(21) Numéro de dépôt: 14739871.3
(22) Date de dépôt: 02.06.2014
(51) Int. Cl.: B65D 83/54

(54) **VALVE DOSEUSE ET DISPOSITIF DE DISTRIBUTION DE PRODUIT FLUIDE COMPORTANT UNE TELLE VALVE**
DOSIERVENTIL UND VORRICHTUNG ZUR DOSIERTEN ABGABE EINES FLÜSSIGEN MATERIALS MIT EINEM SOLCHEN DOSIERVENTIL
METERING VALVE AND DEVICE FOR DISPENSING A FLUID PRODUCT COMPRISING SUCH A VALVE

(30) Priorité: 04.06.2013 FR 1355117
(43) Date de publication de la demande: 13.04.2016
(73) Titulaire: Aptar France SAS, 27110 Le Neubourg (FR)
(72) Inventeur: PETIT, Ludovic, F-27110 Vitot (FR); PIAZZONI, Eric, 27370 Saint Cyr la Campagne (FR)
(74) Mandataire: CAPRI
(86) Numéro de dépôt international: PCT/FR2014/051299
(87) Numéro de publication internationale: WO 2014/195616

(56) Documents cités:
- EP-A1- 0 774 423
- US-A1- 2008 135 584

## Description

La présente invention concerne une valve doseuse et un dispositif de distribution de produit fluide comportant une telle valve.

Les valves dite doseuses, dans lesquelles à chaque actionnement de la valve, une dose précise de produit fluide est distribuée, sont bien connues dans l'état de la technique, et sont généralement assemblées sur un réservoir contenant le produit fluide et un gaz propulseur utilisé pour réaliser l'expulsion de la dose. On connaît notamment deux types de valves doseuses, à savoir d'une part les valves dites à rétention qui après remplissage de la chambre de dosage obturent celle-ci de manière étanche jusqu'au prochain actionnement de la valve, et d'autre part celles qui ne se remplissent que juste avant l'actionnement proprement dit, et qui sont parfois appelées valves sans amorçage ou valves ACT. Pour les valves à rétention, il peut se poser un problème de dose incomplète et/ou de non homogénéité de la dose au moment de son expulsion, en particulier si la valve a été stockée pendant un certain temps, ce qui fait que le produit actif n'est plus réparti de manière parfaitement homogène dans la chambre de dosage. De plus, ces valves à rétention peuvent poser des problèmes d'amorçage, ce qui peut obliger l'utilisateur à actionner deux fois la valve pour être certain d'obtenir une dose complète. Pour éviter ces problèmes, les valves ACT permettent à la chambre de dosage de se remplir rapidement au moment où l'utilisateur va actionner la valve. Avec ce type de valve ACT, après chaque actionnement, la chambre de dosage peut se remplir à nouveau, mais si ensuite la valve est stockée en position droite, alors cette chambre de dosage peut se vider dans le réservoir, la chambre de dosage n'étant alors pas obturée de manière étanche. Les valves ACT présentent un inconvénient en ce que la quantité de produit actif contenu dans la dose émise augmente entre la première et la dernière dose émise, ces variations pouvant être substantielles. Ceci peut être un inconvénient important selon le produit actif concerné.

Les documents FR2860503, WO2009001005 et WO2009071823 décrivent des valves de l'art antérieur.

Le document US 2008/0135584 A1 décrit une valve doseuse selon le préambule de la revendication 1.

La présente invention a pour but d'améliorer les valves doseuses du type ACT, c'est-à-dire celles dans lesquelles la chambre de dosage n'est pas obturée de manière étanche en positon de repos de la soupape.

La présente invention a notamment pour but de fournir une valve doseuse qui soit simple et peu coûteuse à fabriquer et à assembler, et de fonctionnement fiable.

La présente invention a également pour but de fournir une valve doseuse permettant un remplissage aisé et sûr de la chambre de dosage avant chaque actionnement tout en garantissant une bonne fiabilité de fonctionnement de ladite valve.

La présente invention a donc pour objet une valve doseuse de distribution de produit fluide, comportant un corps de valve s'étendant le long d'un axe longitudinal entre une première extrémité axiale et une seconde extrémité axiale, ledit corps de valve contenant une chambre de dosage, et une soupape coulissant axialement dans ledit corps de valve entre une position de repos et une position de distribution, pour sélectivement distribuer le contenu de ladite chambre de dosage, ladite chambre de dosage étant, en position de repos de la soupape, reliée à un réservoir de produit fluide contenant le produit à distribuer, pour permettre le remplissage de la chambre de dosage par gravité lorsque, en position de repos de la soupape, la valve est dans une position inversée avec la chambre de dosage disposée en dessous du réservoir, et pour permettre le vidage de ladite chambre de dosage par gravité lorsque, en position de repos de la soupape, la valve est dans une position droite avec la chambre de dosage disposée au-dessus du réservoir, ledit corps de valve comportant au moins un premier trou et au moins un second trou, pour permettre le remplissage et le vidage de ladite chambre de dosage, ledit au moins un premier trou étant décalé axialement le long dudit axe longitudinal par rapport audit au moins un second trou.

Avantageusement, ladite au moins un premier trou est un trou latéral disposé dans une partie cylindrique du corps de valve.

Avantageusement, une pluralité de premiers trous est disposée au même niveau axial dudit corps de valve.

Selon un premier mode de réalisation avantageux, ledit second trou est un trou axial disposé dans ladite seconde extrémité axiale dudit corps de valve, sur ledit axe longitudinal.

Selon un second mode de réalisation avantageux, ledit au moins un second trou est un trou latéral disposé dans une partie cylindrique du corps de valve, ledit au moins un second trou étant décalé axialement par rapport à ledit au moins un premier trou.

Avantageusement, une pluralité de seconds trous est disposée au même niveau axial dudit corps de valve.

Avantageusement, ledit au moins un premier trou a une section comprise entre 0,05 et 0,8 mm², avantageusement environ 0,2 mm².

Avantageusement, ledit au moins un premier trou est sensiblement cylindrique, avec un diamètre compris entre 0,25 et 1 mm, avantageusement environ 0,5 mm.

Avantageusement, ledit au moins un second trou a une section comprise entre 0,05 et 0,8 mm², avantageusement environ 0,2 mm².

Avantageusement, ledit au moins un second trou est sensiblement cylindrique, avec un diamètre compris entre 0,25 et 0,75 mm, avantageusement environ 0,5 mm.

La présente invention a aussi pour objet un dispositif de distribution de produit fluide comportant une valve doseuse telle que décrite ci-dessus.

Ces caractéristiques et avantages et d'autres de la présente invention apparaîtront plus clairement au cours de la description détaillée suivante de celle-ci, faite en référence aux dessins joints, donnés à titre d'exemples non limitatifs, et sur lesquels
Les figures 1a et 1b sont des vues schématiques en section transversale d'une valve de distribution selon l'art antérieur, respectivement en position de repos et en position de distribution de la soupape, dans la position inversée d'utilisation de la valve,
La figure 2 est une vue de détail en section transversale d'un corps de valve selon un mode de réalisation avantageux de la présente invention,
Les figures 3 et 4 sont des vues schématiques en section transversales, représentant deux modes de réalisation avantageux de la présente invention, en position de repos de la soupape et en position droite de la valve, et
Les figures 5 à 8 sont des diagrammes illustrant respectivement l'impact du diamètre du trou axial, l'impact du diamètre du trou latéral, l'impact du nombre de trous latéraux et l'influence des trous latéraux sur la constance des performances de la valve.

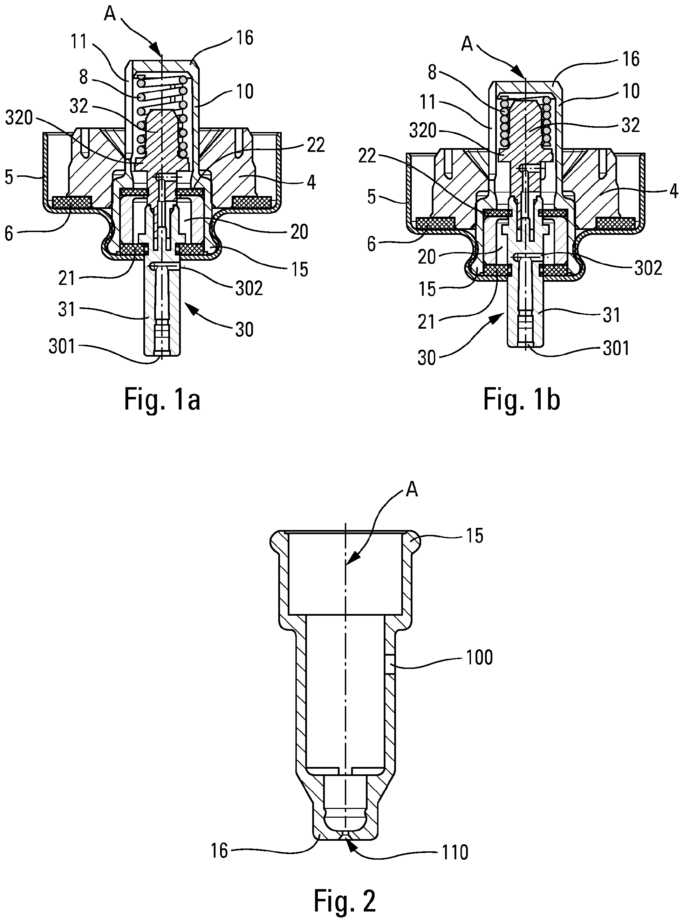

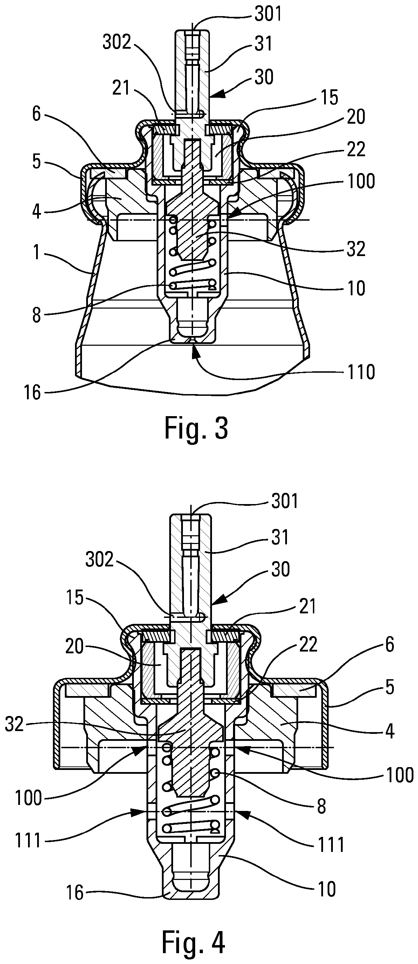

La valve doseuse du type ACT représentée sur les figures 1a et 1 b comporte un corps de valve 10 s'étendant le long d'un axe longitudinal A entre une première extrémité axiale 15 et une seconde extrémité axiale 16. À l'intérieur dudit corps de valve 10, une soupape 30 coulisse entre une position de repos, qui est celle représentée sur la figure 1a, et une position de distribution, représentée sur la figure 1b, dans laquelle la soupape 30 est enfoncée à l'intérieur du corps de valve 10. Cette valve est destinée à être assemblée sur un réservoir 1, représenté sur la figure 3, de préférence au moyen d'un élément de fixation 5, qui peut être une capsule à sertir, à visser ou à encliqueter, et avantageusement avec interposition d'un joint de col 6. Éventuellement, une bague 4 peut être assemblée autour du corps de valve, notamment pour diminuer le volume mort en position inversée et pour limiter le contact du produit fluide avec le joint de col. La soupape 30 est sollicitée vers sa position de repos par un ressort 8, qui est disposé dans le corps de valve 10 et qui coopère d'une part avec ce corps de valve 10, et d'autre part avec une partie de la soupape 30, qui est dans cet exemple une collerette radiale 320. Une chambre de dosage 20 est définie à l'intérieur du corps de valve 10, ladite soupape 30 coulissant à l'intérieur de ladite chambre de dosage pour permettre la distribution du contenu de celle-ci lorsque la valve est actionnée. La chambre de dosage est de préférence définie entre deux joints annulaires, un joint de soupape 21 et un joint de chambre 22, de manière bien connue. Les figures 1a et 1b représentent la valve en position inversée d'utilisation, c'est-à-dire la position dans laquelle la chambre de dosage 20 est disposée en-dessous du réservoir (non représenté sur les figures 1a et 1b). La soupape 30 comporte un orifice de sortie 301 relié à un orifice d'entrée 302, qui est disposé dans la chambre de dosage 20 lorsque la soupape 30 est en position de distribution. La soupape 30 peut être réalisée en deux parties, à savoir une partie haute 31 (également appelée haut de soupape) et une partie basse 32 (également appelée bas de soupape). La partie basse 32 est dans ce mode de réalisation assemblée à l'intérieur de la partie haute 31.

Comme visible sur les figures 1a et 1b, lorsque la soupape 30 est en position de repos, la chambre de dosage 20 est en permanence reliée au réservoir, puisque la chambre de dosage 20 n'est pas obturée de manière étanche dans cette position de repos de la soupape 30. Les corps de valve 10 de l'art antérieur comportent généralement une ou plusieurs ouvertures longitudinales 11, telles que des fentes, s'étendant latéralement dans une partie cylindrique du corps de valve, sur une partie de la hauteur axiale du corps de valve dans le sens de l'axe central longitudinal A. Lorsque la valve est stockée en position droite, la chambre de dosage 20 se vide donc et lorsque l'utilisateur souhaite réutiliser la valve, il la retourne en position inversée, c'est-à-dire la position dans laquelle la chambre de dosage 20 est disposée en dessous du réservoir, de sorte que celle-ci pourra se remplir par gravité.

Les valves doseuses type ACT, bien que fonctionnant globalement de manière satisfaisante, présentent un inconvénient au niveau de la concentration du produit actif qui augmente dans les doses émises au fur et à mesure des utilisations successives de la valve. En d'autres mots, les premières doses distribuées contiennent généralement moins de produit actif que les dernières doses, cette différence de dosage pouvant être parfois substantielle et donc désavantageuse lorsque le dispositif de distribution a pour vocation de distribuer des doses constantes de produit actif. Le problème n'est en fait pas la seule variation du dosage, mais bien l'importance de cette variation, et c'est cette variation qu'il est souhaitable de minimiser.

Les inventeurs se sont aperçus de manière surprenante que cet inconvénient spécifique des valves ACT peut être sensiblement diminué en modifiant le passage du produit fluide entre le réservoir 1 et la chambre de dosage 20.

Ainsi, selon l'invention, pour permettre le remplissage et le vidage de ladite chambre de dosage 20, le corps de valve 10 comporte au moins un premier trou 100 et au moins un second trou 110 ou 111, lesdits premier(s) et second(s) trous étant décalés axialement le long dudit axe longitudinal A.

De manière avantageuse, ledit au moins un premier trou 100 est un trou latéral disposé dans une partie cylindrique du corps de valve 10. La figure 3 illustre un premier trou 100, mais il est entendu qu'il pourrait y avoir plusieurs, par exemple deux, trois ou quatre, premiers trous 100 disposés axialement au même niveau (par rapport à l'axe longitudinal A), et qui peuvent être répartis autour de la périphérie dudit corps de valve 10.

Avantageusement le ou les premier(s) trou(s) 100 est (sont) disposé(s) au niveau d'une paroi de la bague 4, ce qui permet non seulement de limiter de manière optimale le volume mort de la valve mais aussi de fournir un guidage pour le produit lors du remplissage de la chambre de dosage. La bague de la figure 3 présente une paroi au contact desdits premiers trous 100 environ transversale, mais une bague telle qu'illustrée sur la figure 1, avec une paroi inclinée, est aussi envisageable.

La figure 3 illustre un mode de réalisation avantageux de l'invention, dans lequel ledit second trou est un trou axial 110 disposé dans ladite seconde extrémité axiale 16 dudit corps de valve 10, sur ledit axe longitudinal A. Dans ce cas, il n'y a qu'un seul tel second trou prévu au centre de la paroi de fond formant ladite seconde extrémité axiale 16 du corps de valve 10. On pourrait toutefois aussi imaginer avoir plusieurs trous axiaux disposés dans cette paroi de fond, auquel cas ces trous axiaux seraient répartis autour dudit axe longitudinal A.

La figure 4 illustre un autre mode de réalisation avantageux de l'invention, dans lequel ledit second trou 111 est aussi un trou latéral disposé, comme le ou les premier(s) trou(s) 100, dans une partie cylindrique du corps de valve 10, en étant décalé axialement par rapport audit au moins un premier trou 100. Eventuellement, plusieurs seconds trous 111 peuvent être disposés axialement au même niveau (par rapport à l'axe longitudinal A), et ces seconds trous latéraux 111 peuvent être répartis autour de la périphérie dudit corps de valve 10. Dans ce cas, ces seconds trous latéraux 111 pourraient être alignés avec les premiers trous latéraux 100, ou en variante, ils pourraient être décalés sur la périphérie du corps de valve. Il est à noter que les nombres des premiers et seconds trous pourraient être identiques ou différents.

Les différents trous ci-dessus peuvent avoir des formes appropriées quelconque, mais avantageusement, ces premier(s) et/ou second(s) trous sont de forme environ circulaire en section, avec une section comprise entre environ 0,05 et 0,8 mm², avantageusement environ 0,2 mm². Pour un trou circulaire, ceci correspond à un diamètre compris entre 0,25 et 1 mm, avantageusement environ 0,5 mm. Il est à noter que le ou les premier(s) trou(s) 100 peut (peuvent) avoir des formes et/ou dimensions différentes ou identiques au(x) second(s) trou(s) 110 ou 111. Il est supposé que des trous avec ces dimensions fournissent une fonction de filtration du produit actif pour limiter les variations de dosage. Avec des trous trop grands, cet effet de filtration disparait, et avec des trous trop petits, la dose ne peut plus passer rapidement entre le réservoir et la chambre de dosage. Le nombre de trous peut aussi avoir un impact.

Divers tests comparatifs ont été réalisés pour démontrer l'efficacité de l'invention et pour évaluer les caractéristiques dimensionnelles des trous et leur nombre.

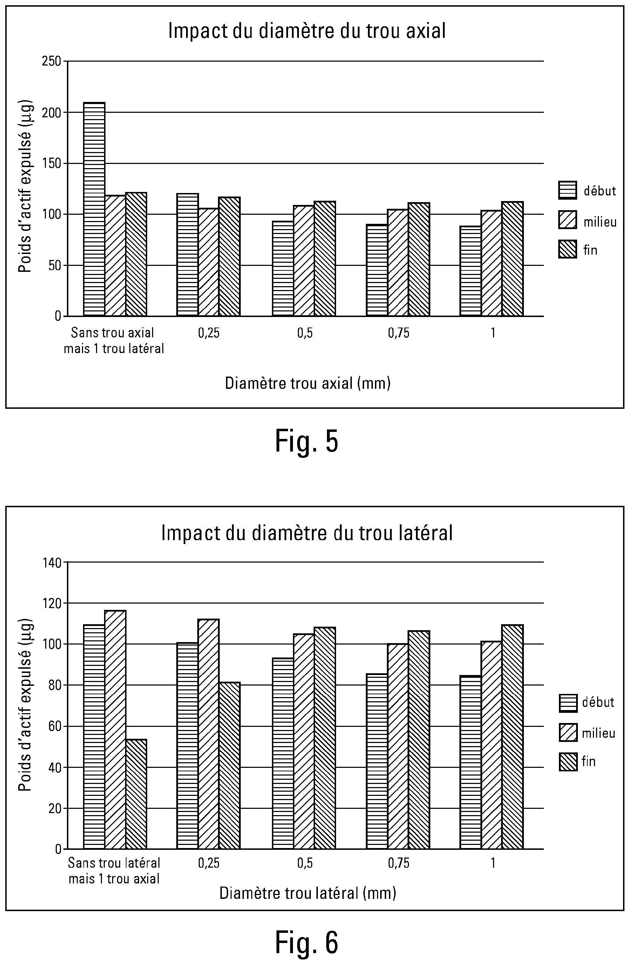

Le diagramme de la figure 5 illustre l'impact de la présence et du diamètre d'un trou axial 110. Dans tous les exemples testés, il y avait un seul premier trou latéral 100. On constate qu'en l'absence de trou axial 110, le dosage de produit actif varie fortement entre le début et la fin d'utilisation de la valve. Avec un trou axial, cette variation diminue, avec la dimension dudit trou axial qui influe légèrement sur la performance. Les meilleurs résultats sont ici obtenus avec un trou axial dont le diamètre est supérieur à 0,25 mm et inférieur à 1 mm, de préférence inférieur à 0,75 mm. On constate que la présence d'un trou axial est particulièrement importante pour le dosage des premières doses distribuées par la valve.

Le diagramme de la figure 6 illustre l'impact de la présence et du diamètre du trou latéral 100. On constate qu'en l'absence de trou latéral 100, le dosage de produit actif varie fortement entre le début et la fin d'utilisation de la valve. Avec un trou latéral, cette variation diminue, avec la dimension dudit trou latéral qui influe légèrement sur la performance. Les meilleurs résultats sont ici obtenus avec un trou latéral dont le diamètre est supérieur à 0,25 mm et inférieur à 1 mm, de préférence inférieur à 0,75 mm. On constate que la présence d'un trou latéral est particulièrement importante pour le dosage des dernières doses distribuées par la valve.

Ainsi, les figures 5 et 6 démontrent l'importance d'associer au moins un premier trou latéral, qui a un impact sur les dernières doses, et au moins un autre trou décalé axialement, qui a un impact sur les premières doses. C'est l'association de ces trous décalés axialement dans le corps de valve qui permet de limiter de manière optimale les variations de dosages entre les premières et dernières doses distribuées. Ceci peut ensuite être optimisé en choisissant de manière appropriée les dimensions des trous respectifs.

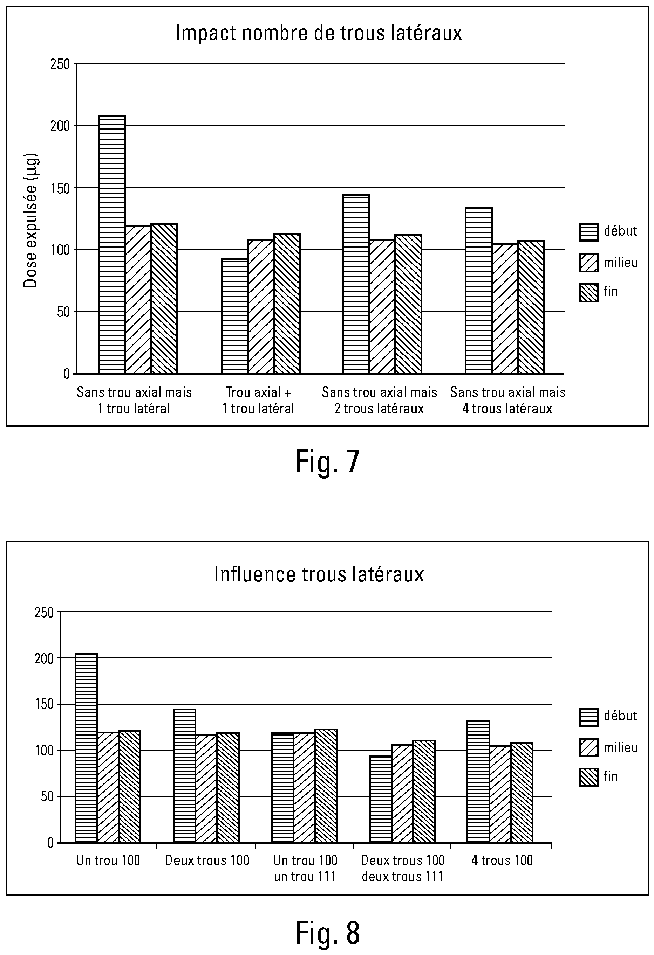

Le diagramme de la figure 7 illustre l'impact du nombre de premiers trous latéraux 100 sur les performances de la valve, mais aussi l'importance de la présence d'un trou axial 110 dans la seconde extrémité 16 du corps de valve. Ainsi, l'exemple de gauche est identique à celui du diagramme de la figure 5 : un seul premier trou latéral 100 et pas de trou axial 110. Le second exemple comporte le même premier trou latéral 100 et un trou axial 110 de diamètre 0,5 mm, ce qui correspond au troisième exemple du diagramme de la figure 5. Dans les troisième et quatrième exemples, il n'y a pas de trou axial 110, mais il y a respectivement 2 et 4 premiers trous latéraux 100. On constate que la présence du trou axial 110 procure les meilleurs résultats. On constate aussi que l'impact du nombre de premiers trous latéraux est réel, puisque les variations de dosage diminuent avec deux trous latéraux, et diminuent encore davantage avec quatre trous latéraux. Par contre, on constate que cet impact du nombre de trous latéraux est bien moindre que l'impact de la présence du trou axial.

Les tests des figures 5 à 7 ont été réalisés avec un second trou formé de manière axiale, mais l'invention fonctionne aussi avec un ou plusieurs seconds trous latéraux 111 comme illustré dans la figure 4, et comme démontré par le diagramme de la figure 8.

Le diagramme de la figure 8 illustre l'influence des trous latéraux 100 et 111. Ainsi, s'il n'y a qu'un seul premier trou latéral 100 et aucun second trou latéral 111, les premières doses sont sensiblement plus concentrées. En augmentant le nombre des premiers trous latéraux 100, toujours sans ajouter de second trou latéral, on fait baisser progressivement la différence de concentration, sans toutefois l'éliminer. Par contre, en ajoutant au moins un second trou latéral 111, on obtient une régularité de dosage satisfaisante. Les meilleurs résultats sont obtenus avec un seul premier trou latéral 100 associé à un seul second trou latéral 111.

De même, les tests ont été réalisés avec des trous circulaires, mais des trous de formes quelconques, par exemple de forme ovale ou en forme de polygone, pourraient aussi être utilisés, du moment que les sections des trous restent équivalentes.

Bien que la présente invention ait été décrite en référence à plusieurs modes de réalisation de celle-ci, il est entendu qu'elle n'est pas limitée par les exemples représentés. Au contraire, l'homme du métier peut y apporter toutes modifications utiles sans sortir du cadre de la présente invention tel que défini par les revendications annexées.

## Revendications

1. Valve doseuse de distribution de produit fluide, comportant un corps de valve (10) s'étendant le long d'un axe longitudinal (A) entre une première extrémité axiale (15) et une seconde extrémité axiale (16), ledit corps de valve (10) contenant une chambre de dosage (20), et une soupape (30) coulissant axialement dans ledit corps de valve (10) entre une position de repos et une position de distribution, pour sélectivement distribuer le contenu de ladite chambre de dosage (20), ladite chambre de dosage (20) étant, en position de repos de la soupape (30), reliée à un réservoir de produit fluide (1) contenant le produit à distribuer, pour permettre le remplissage de la chambre de dosage (20) par gravité lorsque, en position de repos de la soupape (30), la valve est dans une position inversée avec la chambre de dosage (20) disposée en dessous du réservoir, et pour permettre le vidage de ladite chambre de dosage (20) par gravité lorsque, en position de repos de la soupape (30), la valve est dans une position droite avec la chambre de dosage (20) disposée au-dessus du réservoir, ledit corps de valve (10) comportant au moins un premier trou (100) et au moins un second trou (110 ; 111), pour permettre le remplissage et le vidage de ladite chambre de dosage (20), la valve doseuse de distribution étant **caractérisée en ce que** ledit au moins un premier trou (100) est décalé axialement le long dudit axe longitudinal (A) par rapport audit au moins un second trou (110 ; 111).

2. Valve selon la revendication 1, dans laquelle ladite au moins un premier trou (100) est un trou latéral disposé dans une partie cylindrique du corps de valve (10).

3. Valve selon la revendication 2, dans laquelle une pluralité de premiers trous (100) est disposée au même niveau axial dudit corps de valve (10).

4. Valve selon l'une quelconque des revendications précédentes, dans laquelle ledit second trou (110) est un trou axial disposé dans ladite seconde extrémité axiale (16) dudit corps de valve (10), sur ledit axe longitudinal (A).

5. Valve selon l'une quelconque des revendications 1 à 3, dans laquelle ledit au moins un second trou (111) est un trou latéral disposé dans une partie cylindrique du corps de valve (10), ledit au moins un second trou (111) étant décalé axialement par rapport à ledit au moins un premier trou (100).

6. Valve selon la revendication 5, dans laquelle une pluralité de seconds trous (111) est disposée au même niveau axial dudit corps de valve (10).

7. Valve selon l'une quelconque des revendications précédentes, dans laquelle ledit au moins un premier trou (100) a une section comprise entre 0,05 et 0,8 mm², avantageusement environ 0,2 mm².

8. Valve selon l'une quelconque des revendications précédentes, dans laquelle ledit au moins un premier trou (100) est sensiblement cylindrique, avec un diamètre compris entre 0,25 et 1 mm, avantageusement environ 0,5 mm.

9. Valve selon l'une quelconque des revendications précédentes, dans laquelle ledit au moins un second trou (110 ; 111) a une section comprise entre 0,05 et 0,8 mm², avantageusement environ 0,2 mm².

10. Valve selon l'une quelconque des revendications précédentes, dans laquelle ledit au moins un second trou (110 ; 111) est sensiblement cylindrique, avec un diamètre compris entre 0,25 et 0,75 mm, avantageusement environ 0,5 mm.

11. Dispositif de distribution de produit fluide **caractérisé en ce qu'**il comporte une valve doseuse selon l'une quelconque des revendications précédentes.

## Patentansprüche

1. Dosierventil für die Ausgabe eines fluiden Produktes, aufweisend ein Ventilgehäuse (10), das sich entlang einer Längsachse (A) zwischen einem ersten axialen Ende (15) und einem zweiten axialen Ende (16) erstreckt, wobei das Ventilgehäuse (10) eine Dosierkammer (20) und ein federgespanntes Ventil (30) aufweist, das in dem Ventilgehäuse (10) axial zwischen einer Ruheposition und einer Ausgabeposition gleitet, um den Inhalt der Dosierkammer (20) selektiv auszugeben, wobei die Dosierkammer (20) in der Ruheposition des federgespannten Ventils (30) mit einem Behälter für ein fluides Produkt (1) verbunden ist, der das auszugebende Produkt enthält, um das Füllen der Dosierkammer (20) durch Schwerkraft zu gestatten, wenn, in der Ruheposition des federgespannten Ventils (30), sich das Ventil in einer umgekehrten Position mit der Dosierkammer (20) befindet, die unterhalb des Behälters angeordnet ist, und um das Leeren der Dosierkammer (20) durch Schwerkraft zu gestatten, wenn, in der Ruheposition des federgespannten Ventils (30), sich das Ventil in einer aufrechten Position mit der Dosierkammer (20) befindet, die oberhalb des Behälters angeordnet ist, wobei das Ventilgehäuse (10) mindestens ein erstes Loch (100) und mindestens ein zweites Loch (110; 111) aufweist, um das Füllen und Leeren der Dosierkammer (20) zu gestatten, wobei das Dosierventil zur Ausgabe **dadurch gekennzeichnet ist, dass** das mindestens eine erste Loch (100) axial entlang der Längsachse (A) relativ zu dem mindestens einen zweiten Loch (110; 111) versetzt ist.

2. Ventil nach Anspruch 1, wobei das mindestens eine erste Loch (100) ein seitliches Loch ist, das in einem zylindrischen Teil des Ventilgehäuses (10) angeordnet ist.

3. Ventil nach Anspruch 2, wobei mehrere erste Löcher (100) auf der gleichen axialen Höhe wie das Ventilgehäuse (10) angeordnet sind.

4. Ventil nach einem der vorhergehenden Ansprüche, wobei das zweite Loch (110) ein axiales Loch ist, das in dem zweiten axialen Ende (16) des Ventilgehäuses (10) auf der Längsachse (A) angeordnet ist.

5. Ventil nach einem der vorhergehenden Ansprüche 1 bis 3, wobei das mindestens eine zweite Loch (111) ein seitliches Loch ist, das in einem zylindrischen Teil des Ventilgehäuses (10) angeordnet ist, wobei das mindestens eine zweite Loch (111) axial relativ zu dem mindestens einen ersten Loch (100) versetzt ist.

6. Ventil nach Anspruch 5, wobei mehrere zweite Löcher (111) auf der gleichen axialen Höhe wie das Ventilgehäuse (10) angeordnet sind.

7. Ventil nach einem der vorhergehenden Ansprüche, wobei das mindestens eine erste Loch (100) einen Querschnitt zwischen 0,05 und 0,8 mm², vorteilhafterweise etwa 0,2 mm² aufweist.

8. Ventil nach einem der vorhergehenden Ansprüche, wobei das mindestens eine erste Loch (100) im Wesentlichen zylindrisch ist, mit einem Durchmesser zwischen 0,25 und 1 mm, vorteilhafterweise etwa 0,5 mm.

9. Ventil nach einem der vorhergehenden Ansprüche, wobei das mindestens eine zweite Loch (110; 111) einen Querschnitt zwischen 0,05 und 0,8 mm², vorteilhafterweise etwa 0,2 mm² aufweist.

10. Ventil nach einem der vorhergehenden Ansprüche, wobei das mindestens eine zweite Loch (110; 111) im Wesentlichen zylindrisch ist, mit einem Durchmesser zwischen 0,25 und 0,75 mm, vorteilhafterweise etwa 0,5 mm.

11. Ausgabevorrichtung für ein fluides Produkt, **dadurch gekennzeichnet, dass** sie ein Dosierventil nach einem der vorhergehenden Ansprüche aufweist.

## Claims

1. A metering valve for dispensing fluid, the valve comprising a valve body (10) that extends along a longitudinal axis (A) between a first axial end (15) and a second axial end (16), said valve body (10) containing a metering chamber (20); and a valve member (30) that slides axially in said valve body (10) between a rest position and a dispensing position, for selectively dispensing the contents of said metering chamber (20), said metering chamber (20) being connected, in the rest position of the valve member (30), to a fluid reservoir (1) containing the fluid to be dispensed, so as to make it possible to fill the metering chamber (20) by gravity when the valve is in an upsidedown position with the metering chamber (20) arranged below the reservoir while the valve member (30) is in the rest position, and so as to make it possible to empty said metering chamber (20) by gravity when the valve is in an upright position with the metering chamber (20) arranged above the reservoir while the valve member (30) is in the rest position, said valve body (10) including at least one first hole (100) and at least one second hole (110; 111), so as to make it possible to fill and to empty said metering chamber (20), the metering valve being **characterized in that** said at least one first hole (100) is axially offset along said longitudinal axis (A) relative to said at least one second hole (110; 111).

2. A valve according to claim 1, wherein said at least one first hole (100) is a side hole that is arranged in a cylindrical portion of the valve body (10).

3. A valve according to claim 2, wherein a plurality of first holes (100) are arranged at the same axial level of said valve body (10).

4. A valve according to any preceding claim, wherein said second hole (110) is an axial hole that is arranged in said second axial end (16) of said valve body (10), on said longitudinal axis (A).

5. A valve according to any one of claims 1 to 3, wherein said at least one second hole (111) is a side hole that is arranged in a cylindrical portion of the valve body (10), said at least one second hole (111) being axially offset relative to said at least one first hole (100).

6. A valve according to claim 5, wherein a plurality of second holes (111) are arranged at the same axial level of said valve body (10).

7. A valve according to any preceding claim, wherein said at least one first hole (100) has a section that lies in the range 0.05 mm² to 0.8 mm², advantageously about 0.2 mm².

8. A valve according to any preceding claim, wherein said at least one first hole (100) has a cylindrical section, with a diameter that lies in the range 0.25 mm to 1 mm, advantageously about 0.5 mm.

9. A valve according to any preceding claim, wherein said at least one second hole (110; 111) has a section that lies in the range 0.05 mm² to 0.8 mm², advantageously about 0.2 mm².

10. A valve according to any preceding claim, wherein said at least one second hole (110; 111) is substantially cylindrical, with a diameter that lies in the range 0.25 mm to 0.75 mm, advantageously about 0.5 mm.

11. A fluid dispenser device, **characterized in that** it includes a metering valve according to any preceding claim.
